# EUROPÄISCHE PATENTSCHRIFT

(11) **EP 3 668 921 B1**
(45) Veröffentlichungstag und Bekanntmachung des Hinweises auf die Patenterteilung: **18.08.2021**
(21) Anmeldenummer: 18749390.3
(22) Anmeldetag: 09.08.2018
(51) Int. Cl.: C08K 9/06, C08L 67/02

(54) **SILANMODIFIZIERTE, SILIKAT-HALTIGE SPRITZGUSSARTIKEL**
SILANE-MODIFIED, SILICATE-CONTAINING INJECTION MOULDED ARTICLE
ARTICLE MOULÉ PAR INJECTION CONTENANT DU SILICATE, MODIFIÉ PAR SILANE

(30) Priorität: 15.08.2017 EP 17186288
(43) Veröffentlichungstag der Anmeldung: 24.06.2020
(73) Patentinhaber: BASF SE, 67056 Ludwigshafen am Rhein (DE)
(72) Erfinder: LEHENMEIER, Maximilian, 67056 Ludwigshafen (DE); BUSSMANN, Martin, 67056 Ludwigshafen (DE); EFFEN, Norbert, 67056 Ludwigshafen (DE); SPRAFKE, Johannes Klaus, 67056 Ludwigshafen (DE); SKUPIN, Gabriel, 67056 Ludwigshafen (DE)
(74) Vertreter: BASF IP Association
(86) Internationale Anmeldenummer: PCT/EP2018/071607
(87) Internationale Veröffentlichungsnummer: WO 2019/034517

(56) Entgegenhaltungen:
- WO-A1-97/47680
- WO-A1-2015/169660

## Beschreibung

Die vorliegende Erfindung betrifft einen Spritzgussartikel enthaltend:
i) 30 bis 90 Gew.-%, bezogen auf das Gesamtgewicht der Komponenten i bis iii, eines biologisch abbaubaren Polyesters enthaltend:
   i-a) 90 bis 100 mol %, bezogen auf die Komponenten a bis b, Bernsteinsäure;
   i-b) 0 bis 10 mol %, bezogen auf die Komponenten a bis b, einer oder mehrerer C₆-C₂₀ Dicarbonsäuren;
   i-c) 99 bis 100 mol %, bezogen auf die Komponenten a bis b, 1,3-Propandiol oder 1,4-Butandiol;
   i-d) 0 bis 1 Gew.- %, bezogen auf die Komponenten a bis c eines Kettenverlängerers und/oder Verzweigers;
ii) 0 bis 35 Gew.-%, bezogen auf das Gesamtgewicht der Komponenten i bis iii, Polymilchsäure;
iii) 10 bis 35 Gew.-%, bezogen auf das Gesamtgewicht der Komponenten i bis iii, mindestens eines Methacrylsilan- oder Vinylsilan-modifizierten Silikats ausgewählt aus der Gruppe bestehend aus: Kaolin, Muskovit, Montmorellinit, Talk und Wollastonit.

Aus der WO2015/169660 sind nicht oberflächenmodifizierte,Talk-haltige Spritzgussartikel bekannt. Diese Spritzgussartikel können hinsichtlich ihrer Kerbschlagzähigkeit und des E-Moduls für hohe mechanische Beanspruchung nicht voll befriedigen.

Ziel der vorliegenden Erfindung war es somit Spritzgussartikel bereitzustellen, die die obengenannten Nachteile nicht aufweisen. Insbesondere war es das Ziel, einen Spritzgussartikel mit hoher Kerbschlagzähigkeit und einem hohen E-Modul herzustellen.

Überraschenderweise wird das Ziel erreicht durch Spritzgussartikel enthaltend:
i) 30 bis 90 Gew.-%, vorzugsweise 42 bis 75 Gew.-%, bezogen auf das Gesamtgewicht der Komponenten i bis iii, eines aliphatischen Polyesters i;
ii) 0 bis 35 Gew.-%, vorzugsweise 10 bis 28 Gew.-%, bezogen auf das Gesamtgewicht der Komponenten i bis iii, Polymilchsäure;
iii) 10 bis 35 Gew.-%, vorzugsweise 15 bis 30 Gew.-%, bezogen auf das Gesamtgewicht der Komponenten i bis iii, mindestens eines Methacrylsilan- oder Vinylsilan-modifizierten Silikats ausgewählt aus der Gruppe bestehend aus: Kaolin, Muskovit, Montmorellinit, Talk und Wollastonit bevorzugt eines Wollastonits und insbesondere bevorzugt eines Kaolins.

Die erfindungsgemäßen Spritzgussartikel weisen trotz des niedrigen Polymilchsäuregehalts oder auch trotz des völligen Verzichts von Polymilchsäure ein erstaunlich hohes E-Modul auf; beziehungsweise trotz des Polymilchsäuregehalts eine gute Kerbschlagzähigkeit auf.

Im Folgenden wird die Erfindung näher beschrieben.

Die für die Erfindung geeigneten aliphatischen Polyester i sind in der WO 2010/034711 näher beschrieben, auf die hier ausdrücklich Bezug genommen wird.

Polyester i sind in der Regel wie folgt aufgebaut:
i-a) 90 bis 100 mol %, bezogen auf die Komponenten i-a bis i-b, Bernsteinsäure;
i-b) 0 bis 10 mol %, bezogen auf die Komponenten i-a bis i-b, einer oder mehrerer C₆-C₂₀ Dicarbonsäuren;
i-c) 99 bis 100 mol %, bezogen auf die Komponenten i-a bis i-b, 1,3 Propandiol oder 1,4-Butandiol;
i-d) 0 bis 1 Gew.- %, bezogen auf die Komponenten i-a bis i-c eines Kettenverlängerers und/oder Verzweigers;

Die Synthese der beschriebenen Polyester i erfolgt vorzugsweise in einer direkten Polykondensationsreaktion der einzelnen Komponenten. Die Dicarbonsäurederivate werden dabei zusammen mit dem Diol in Anwesenheit eines Umesterungskatalysators direkt zum Polykondensat hohen Molekulargewichts umgesetzt. Auf der anderen Seite kann der Copolyester i auch durch Umesterung von Polybutylensuccinat (PBS) mit C₆-C₂₀ Dicarbonsäuren in Gegenwart von Diol gewonnen werden. Als Katalysatoren werden üblicherweise Zink-, Aluminium- und insbesondere Titankatalysatoren eingesetzt. Titankatalysatoren wie Tetra(isopropyl)orthotitanat und insbesondere Tetraisobutoxytitanat (TBOT) haben gegenüber den in der Literatur häufig verwendeten Zinn-, Antimon-, Kobalt- und Bleikatalysatoren wie beispielsweise Zinndioctanoat den Vorteil, dass im Produkt verbleibende Restmengen des Katalysators oder Folgeprodukt des Katalysators weniger toxisch sind. Dieser Umstand ist bei den biologisch abbaubaren Polyestern besonders wichtig, da sie beispielsweise als Kompostierbeutel oder Mulchfolien unmittelbar in die Umwelt gelangen.

Die Bernsteinsäure oder ein Gemisch der Dicarbonsäuren wird im Allgemeinen in Anwesenheit eines Überschusses an Diol zusammen mit dem Katalysator in der Regel zunächst während eines Zeitraumes von etwa 60-180 min auf eine Innentemperatur von 170 bis 230 °C erhitzt und entstehendes Wasser abdestilliert. Anschließend wird die Schmelze des so erhaltenen Präpolyesters üblicherweise bei einer Innentemperatur von 200 zu 250 °C innerhalb von 3 bis 6 Stunden bei vermindertem Druck unter Abdestillieren freiwerdenden Diols bis zur gewünschten Viskosität mit einer Viskositätszahl (VZ) von 100 bis 450 mL/g und vorzugsweise 120 bis 250 mL/g kondensiert.

Die erfindungsgemäßen Polyester i lassen sich darüber hinaus nach den in JP 2008-45117 und EP-A 488 617 beschriebenen Verfahren herstellen. Als vorteilhaft hat es sich erwiesen, zunächst die Komponenten a bis c zu einem Präpolyester mit einer VZ von 50 bis 100 mL/g, vorzugsweise 60 bis 80 mL/g umzusetzen und diesen anschließend mit einem Kettenverlängerer i-d, beispielsweise mit Diisocyanaten oder mit epoxidhaltigen Polymethacrylaten in einer Kettenverlängerungsreaktion zu einem Polyester i mit einer VZ von 100 bis 450 mL/g, vorzugsweise 150 bis 300 mL/g umzusetzen.

Als Säurekomponente i-a werden 90 bis 100 mol %. bezogen auf die Säurekomponenten a und b, vorzugsweise 91 bis 99 mol%, und insbesondere bevorzugt 92 bis 98 mol% Bernsteinsäure eingesetzt. Bernsteinsäure ist auf petrochemischem Weg sowie vorzugsweise aus nachwachsenden Rohstoffen wie beispielsweise in EPA 2185682 beschrieben zugänglich. EPA 2185682 offenbart ein biotechnologisches Verfahren zur Herstellung von Bernsteinsäure und 1,4-Butandiol ausgehend von unterschiedlichen Kohlehydraten mit Mikroorganismen aus der Klasse der *Pasteurellaceae.*

Säurekomponente i-b wird in 0 bis 10 mol%, vorzugsweise 1 bis 9 mol%, und insbesondere bevorzugt 2 bis 8 mol% bezogen auf die Säurekomponenten i-a und i-b, eingesetzt.

Unter C₆-C₂₀ Dicarbonsäuren b sind insbesondere Adipinsäure, Korksäure, Azelainsäure, Sebazinsäure, Brassylsäure und/oder Arachidonsäure zu verstehen. Bevorzugt sind Korksäure, Azelainsäure, Sebazinsäure und/oder Brassylsäure. Die obengenannten Säuren sind aus nachwachsenden Rohstoffen zugänglich. Beispielsweise Sebazinsäure ist aus Rizinusöl zugänglich. Derartige Polyester zeichnen sich durch ein exzellentes biologisches Abbauverhalten aus [Literatur: Polym. Degr. Stab. 2004, 85, 855-863].

Die Dicarbonsäuren i-a und i-b können entweder als freie Säure oder in Form esterbildender Derivate eingesetzt werden. Als esterbildende Derivate sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden. Dabei können die Dicarbonsäuren oder deren esterbildenden Derivate, einzeln oder als Gemisch eingesetzt werden.

Die Diole 1,3-Propandiol und 1,4-Butandiol sind ebenfalls aus nachwachsenden Rohstoffen zugänglich. Es können auch Mischungen der beiden Diole verwendet werden. Aufgrund der höheren Schmelztemperaturen und der besseren Kristallisation des gebildeten Copolymers ist 1,4-Butandiol als Diol bevorzugt.

In der Regel wird zu Beginn der Polymerisation das Diol (Komponente i-c) zu den Säuren (Komponenten i-a und i-b) in einem Verhältnis von Diol zu Disäuren von 1,0:1 bis 2,5:1 und vorzugsweise 1,3:1 bis 2,2:1 eingestellt. Überschüssige Diolmengen werden während der Polymerisation abgezogen, sodass sich am Ende der Polymerisation ein ungefähr äquimolares Verhältnis einstellt. Unter ungefähr äquimolar wird ein Disäure/Diol-Verhältnis von 0,98 bis 1,02 verstanden.

In einer Ausführungsform werden 0 bis 1 Gew-%, vorzugsweise 0,1 bis 0,9 Gew.-% und insbesondere bevorzugt 0,1 bis 0,8 Gew.-% bezogen auf das Gesamtgewicht der Komponenten i-a bis i-b, eines Verzweiger i-d und/oder Kettenverlängerers i-d' ausgewählt aus der Gruppe bestehend aus: einem polyfunktionellen Isocyanat, Isocyanurat, Oxazolin, Carbonsäureanhydrid wie Maleinsäureanhydrid, Epoxid (insbesondere einem epoxidhaltigen Poly(meth)acrylats), einem mindestens trifunktionellen Alkohol oder einer mindestens trifunktionellen Carbonsäure eingesetzt. In der Regel werden keine Verzweiger, sondern lediglich Kettenverlängerer eingesetzt.

Als bifunktionelle Kettenverlängerer eignen sich beispielsweise Toluylen-2,4-diisocyanat, Toluylen-2,6-diisocyanat, 2,2'-Diphenylmethandiisocyanat, 2,4'-Diphenylmethandiisocyanat, 4,4'-Diphenylmethan-diisocyanat, Naphthylen-1,5-diisocyanat oder Xylylen-diisocyanat,1,6-Hexamethylendiisocyanat, Isophorondiisocyanat oder Methylen-bis(4-isocyanatocyclo-hexan) verstanden. Besonders bevorzugte sind Isophorondiisocyanat und insbesondere 1,6-Hexamethylendiisocyanat.

Unter aliphatischen Polyestern i werden insbesondere Polyester wie Polybutylensuccinat (PBS), Polybutylensuccinat-co-adipat (PBSA), Polybutylensuccinat-co-sebacat (PBSSe), Polybutylensuccinat-co-azelat (PBSAz) oder Polybutylensuccinat-co-brassylat (PBSBr) verstanden. Die aliphatischen Polyester PBS und PBSA werden beispielsweise von Showa Highpolymer unter dem Namen Bionolle® und von Mitsubishi unter dem Namen GSPIa® vermarktet. Neuere Entwicklungen sind in der WO 2010/034711 beschrieben.

Die Polyester i weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 50000 g/mol, ein gewichtsmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 30 und 450, vorzugsweise von 100 bis 400 g/mL (gemessen in o-Dichlorbenzol/Phenol (Gewichtsverhältnis 50/50)). Der Schmelzpunkt liegt im Bereich von 85 bis 130, bevorzugt im Bereich von 95 bis 120°C. Der MVR Bereich nach DIN EN 1133-1 liegt zwischen 8 bis 40 cm³/10 min (190 °C, 2,16 kg).

Als steife Komponente ii kann Polymilchsäure (PLA) eingesetzt werden.

Polymilchsäure mit dem folgenden Eigenschaftsprofil wird bevorzugt eingesetzt:
- einer Schmelzvolumenrate (MVR bei 190° C und 2.16 kg nach ISO 1133-1 DE insbesondere von 30 bis 40 cm³/10 Minuten)
- einem Schmelzpunkt unter 240° C;
- einem Glaspunkt (Tg) größer 55°C
- einem Wassergehalt von kleiner 1000 ppm
- einem Monomeren-Restgehalt (Lactid) von kleiner 0.3%
- einem Molekulargewicht von größer 80 000 Dalton.

Bevorzugte Polymilchsäuren sind beispielsweise NatureWorks® 6201 D, 6202 D, 6251 D, 3051 D und insbesondere 3251 D sowie kristallinen Polymilchsäuretypen der Fa. NatureWorks.

Die Polymilchsäure ii wird in einem Gewichtsprozent-Anteil, bezogen auf die Komponenten i und iii, von 0 bis 35 %, vorzugsweise von 10 bis 28% eingesetzt. Hierbei bildet vorzugsweise die Polymilchsäure ii die disperse Phase und der Polyester i die kontinuierliche oder ist Teil einer cokontinuierlichen Phase. Polymermischungen mit Polyester i in der kontinuierlichen Phase oder als Teil einer cokontinuierlichen Phase weisen eine höhere Wärmeformbeständigkeit auf als Polymermischungen, in denen Polymilchsäure ii die kontinuierliche Phase bildet.

Wie eingangs erwähnt, weisen die erfindungsgemäßen Spritzgussartikel trotz des niedrigen Polymilchsäuregehalts oder auch trotz des völligen Verzichts von Polymilchsäure ein erstaunlich hohes E-Modul auf.

In der Regel werden 10 bis 35 Gew.-%, insbesondere 15 bis 30 Gew.-% bezogen auf das Gesamtgewicht der Komponenten i bis iii, mindestens eines Methacrylsilan- oder Vinylsilan-modifizierten Silikats ausgewählt aus der Gruppe bestehend aus: Kaolin, Muskovit, Montmorellinit, Talk und Wollastonit bevorzugt eines Wollastonits und insbesondere bevorzugt eines Kaolins als Komponente iii eingesetzt.

Die Oberfächenmodifikation des Silikats spielt eine entscheidende Rolle. Zur Oberflächenmodifizierung werden Methacrylsilan oder Vinylsilan eingesetzt. Derartige silanmodifizierte Silikate werden beispielsweise von den Firmen Imery, Amberger Kaolinwerke und insbesondere der Hoffmann-Gruppe vertrieben. In den vorliegenden Spritzgussartikeln haben silanmodifizierte Wollastonite der Amberger Kaolinwerke, die unter dem Markennamen Tremin® vertrieben werden und insbesondere bevorzugt silanmodifizierte Kaoline der Hoffmann Gruppe, die unter dem Namen aktifit vertriebenen werden, hervorragende mechanische Eigenschaften geliefert.

Neben der Oberflächenmodifikation spielt die Korngröße und das Aspektverhältnis (L/D- oder Querschnittverhältnis) eine große Rolle.

Eine geringe Korngröße führt in der Regel zu hohen Kerbschlagzähigkeiten, jedoch zu einem geringeren E-Modul. Bevorzugt eingesetzt wird ein feines Silikat mit einem Anteil von 50% Partikeln (Korngröße D₅₀ gemessen nach ISO 13320-1) von unter 5 µm, vorzugsweise unter 2 µm. Durch Sieben kann der Anteil an Teilchen unter 16 µm vorzugsweise unter 10 µm auf 97 % gesteigert werden.

As vorteilhaft hat sich ein Aspektverhältnis von 1 bis 15 und vorzugsweise 2 bis 10 und insbesondere bevorzugt von 2 bis 6 erwiesen. Das mittlere Aspektverhältnis kann mittels Leitfähigkeitsmessung wie in der EP 528078 B1 beschrieben ermittelt werden.

Bevorzugt wird als Silikat oberfächenmodifiziertes Kaolin eingesetzt. Kaolin ist ein Naturprodukt und weist neben dem Hauptbestandteil Kaolinit - einem hydratisierten Aluminiumsilikat - andere Tonminerale und unzersetzte Feldspatteilchen auf.

Eine bevorzugte Kaolinquelle ist die Neuburger Kieselerde, ein Gemisch aus korpuskulärer Kieselsäure und lamellarem Kaolinit. Die Kieselsäure weist hier eine runde Kornform aus ca. 200 nm großen aggregierten Primärteilchen auf.

Bevorzugt eingesetzt ist feines Kaolin mit einem kugeläquivalentem statisch gemittelten Partikeldurchmesser von 0,3 bis 1,5 µm; und insbesondere bevorzugt von 0,3 bis 1,0 µm und einem Anteil von 50% Partikeln unter 2 µm. Durch Sieben kann der Anteil an Teilchen unter 10 µm auf 97 % gesteigert werden.

Der Ölbedarf als Maß der relativen Oberfläche beträgt 23 g/100 g für einen groben Kaolin, 45 g/100 g für einen feinen Kaolin und 55 g/100 g für einen kalzinierten Kaolin.

Kalziniertes Kaolin ist wegen der erhöhten spezifischen Oberfläche besonders bevorzugt. Durch Kalzination wird das Kristallwasser des Kaolinanteils ausgetrieben. Bei der Neuburger Kieselerde bleibt der kryptokristalline Kieselsäureanteil bei der Kalzination inert.

Weiterhin können die erfindungsgemäßen Spritzgussartikel 0 bis 15 Gew.-%, bezogen auf die Polymermischung i bis iii, andere mineralische Füllstoffe ausgewählt aus der Gruppe bestehend aus: Kreide, Graphit, Gips, Leitruß, Eisenoxid, Calciumchlorid, Natriumcarbonat, Titandioxid, und Mineralfasern enthalten. Auch Füllstoffe aus nachwachsenden Rohstoffen wie Stärke, nicht thermoplastifizierte und insbeseondere plastifizierte Stärke, Cellulose, Chitin oder Chitosan können in 0 bis 10 Gew.-%, bezogen auf die Polymermischung i bis iii, in den erfindungsgemäßen Spritzgussartikeln enthalten sein.

Weiterhin kann der erfindungsgemäße Compound der Komponenten i bis iii weitere dem Fachmann bekannte, Additive enthalten. Beispielsweise die in der Kunststofftechnik üblichen Zusatzstoffe wie Stabilisatoren; Nukleierungsmittel wie die bereits obengenannten mineralischen Füllstoffe iii oder auch kristalline Polymilchsäure; Gleit- und Trennmittel wie Stearate (insbesondere Calziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Wachse wie beispielsweise Erucasäureamid, Stearinsäureamid oder Behenamid, Bienenwachs oder Bienenwachsester; Antistatikum, UV-Absorbers; UV-Stabilisators; Antifog-Mittel oder Farbstoffe. Die Additive werden in Konzentrationen von 0 bis 2 Gew.-%, insbesondere 0,1 bis 2 Gew.-% bezogen auf den erfindungsgemäßen Compound i bis iii eingesetzt. Weichmacher können in 0,1 bis 10 Gew.-% in dem erfindungsgemäßen Compound i bis iii enthalten sein.

Um die Spritzgußartikel mit besonders hohen Kerbschlagzähigkeiten zu erhalten, kann neben dem erfindungsgemäßen oberflächenmodifizierten Kaolin entweder ein thermoplastisches Polyurethan (im Folgenden auch TPU genannt) oder ein Thermoplastischer Copolyester (im Folgenden auch TPEE genannt) zugesetzt werden.

Thermoplastische Polyurethane sind hinlänglich bekannt. Die Herstellung erfolgt durch Umsetzung von (a) Isocyanaten (Hartphase) mit (b) gegenüber Isocyanaten reaktiven Verbindungen / Polyol mit einem zahlenmittleren Molekulargewicht von 0,5 x 103 g /mol bis 5 x 103 g /mol (Weichphase) und gegebenenfalls (c) Kettenverlängerungsmitteln mit einem Molekulargewicht von 0,05 x 103 g /mol bis 0,499 x 103 g /mol gegebenenfalls in Gegenwart von (d) Katalysatoren und/oder (e) üblichen Hilfsstoffen und/oder Zusatzstoffen.

Die gegenüber Isocyanat reaktive Verbindung (b) hat im statistischen Mittel mindestens 1,8 und höchstens 3,0 zerewitinoffaktive Wasserstoffatome, diese Anzahl wird auch als Funktionalität der gegenüber Isocyanat reaktiven Verbindung (b) bezeichnet und gibt die aus einer Stoffmenge theoretisch auf ein Molekül heruntergerechnete Menge der mit Isocyanat reaktiven Gruppen des Moleküls an. Die Funktionalität ist bevorzugt zwischen 1,8 und 2,6, weiter bevorzugt zwischen 1,9 und 2,2 und insbesondere 2.

Beispiele für die erfindungsgemäßen Spritzgussartikel besonders bevorzugten TPUs sind die unter dem Markennamen Elastollan® der Fa. BASF Polyurethane GmbH wie beispielsweise: 685A, S80A, SP 806, 1085A, 785A, 595A, 1598 A, 1295 A, N65A oder C85A.

Beispiele für die erfindungsgemäßen Spritzgussartikel besonders bevorzugten TPEEs sind die unter den Markennamen Hytrel®, Arnitel®, Riteflex®, Pebax® oder Pelprene® vertriebenen Produkte.

Im Allgemeinen sind Spritzgussartikel mit Schichtdicken unter 1 mm und vorzugsweise unter 0,8 mm biologisch abbaubar. Die biologische Abbaubarkeit führt dazu, dass die Polyester-(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 (Bezug nehmend auf ISO 14855) CO₂-freie Luft durch gereiften Kompost während des Kompostierens strömen gelassen und dieser einem definiertem Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

Beim Spritzgießen, das auch als Spritzguss oder Spritzgussverfahren bezeichnet wird handelt es sich um ein Formgebungsverfahren, das in der Kunststoffverarbeitung sehr häufig verwendet wird. Im Spritzguss lassen sich äußerst wirtschaftlich direkt verwendbare Formteile in großer Stückzahl herstellen. Das Verfahren funktioniert vereinfacht wie folgt: In einer Spritzgießmaschine, die aus einem beheizbaren Zylinder, in der sich Schneckenwelle dreht, besteht, wird der jeweilige thermoplastische Werkstoff ("Formmasse"), geschmolzen und in eine Form aus Metall ("Werkzeug") eingespritzt. Der Hohlraum des Werkzeugs bestimmt die Form und die Oberflächenstruktur des fertigen Teils. Es sind heute Teile von deutlich unter einem Gramm bis in den zweistelligen Kilogramm-Bereich herstellbar.

Durch Spritzgießen lassen sich Gebrauchsgegenstände mit hoher Genauigkeit wirtschaftlich und in kurzer Zeit produzieren. Die Beschaffenheit der Oberfläche des jeweiligen Bauteils kann dabei von den Konstrukteuren nahezu frei gewählt werden. Von glatten Oberflächen für optische Anwendungen, über Narbungen für berührungsfreundliche Bereiche, bis hin zu Mustern oder Gravuren lassen sich eine Vielfalt von Oberflächenstrukturen darstellen.

Das Spritzgussverfahren eignet sich aus wirtschaftlichen Gründen insbesondere für die Produktion größerer Stückzahlen, wie Verpackungsartikel.

Artikel wie Pralinenschachteleinlagen, Spielekartoneinsätze, Klappblister für alle möglichen Kleinartikel an Lochrasterwänden im Einzelhandel, Joghurt- oder Margarinebecher sind weit verbreitet. Ein bevorzugter Artikel sind Deckel für Kaffeebecher oder andere Becher für Heissgetränke, sowie Gebinde zur Abfüllung von heißen Lebensmitteln.

Ein besonders bevorzugter Spritzgussartikel ist die Kaffeekapsel. Unter Kaffeekapsel wird ein Gebinde von 1 ml bis 80 ml Füllvolumen, vorzugsweise 3 bis 50 ml, verstanden. Dieses Gebinde wird mit einem pulverförmigen Lebensmittel, insbesondere Kaffeepulver oder einer Mischung aus pulverförmigen Lebensmitteln befüllt. Unter Lebensmittel wird neben Kaffee, Tee, Milch, Kakao und Suppenextrakte verstanden. Die Form des Gebindes kann rotations-symmetrisch, kegelförmig, kugelförmig, als auch eckig sein, vorzugswiese jedoch rotationssymmetrisch und hauptsächlich zylindrisch sein. Dieses Gebinde dient zum einen zur Lagerung des/der Lebensmittel sowie zum Zubereiten eines wässrigen Heißgetränks welches durch das Durchströmen von heißem Wasser (zwischen 60 und 100°C) in einem anschließenden Schritt hergestellt wird. Das durchströmende Wasser löst beim Durchströmen des Gebindes Geschmacks- und Bitterstoffe und bildet so das Heißgetränk.

Dieses Gebinde soll durch Spritzguss gefertigt werden. Die hierzu verwendete Wanddicke der Flachfolie aus der das/die Gebinde hergestellt werden hat eine Dicke von 100 bis 1000 µm, vorzugsweise 250 bis 800 µm, und insbesondere von 155 bis 550 µm. Der Artikel kann aus einer und vorzugsweise aus mehreren Schichten bestehen. Mindestens eine Schicht enthält den eingangs beschriebenen Compound der Komponenten i) bis iii). Eine weitere Schicht des fertig geformten Gebindes bildet vorzugsweise eine Barriere-bildende Schicht. Der Mehrschichtaufbau kann durch Mehrschichtextrusion bei der Flachfolienherstellung hergestellt werden, sowie auch nach der Flachfolienherstellung als Schicht appliziert werden, durch Extrusion, Drucken, Aufsprühen oder Besputtern, prinzipiell mit dem Auftragen einer Dispersion, eines Lackes oder eines weiteren Polymer-basierten oder Polymer-beinhaltenden Systems oder dem Aufbringen einer metallischen- oder oxyd-haltigen Schicht, vorzugsweise jedoch durch eine polymerbasierte oder metallisierte Schicht. Als metallisierte Schicht kommt beispielsweise Aluminium in Frage, als polymerbasierte Schicht eignen sich Schichten enthaltend Polyglykolsäure (PGA), Polyhydroxyalkanoate (PHA) wie z.B. Poly-3-hydroxybutyrat (PHB), Poly-3-hydroxybutyrat-co-3-hydroxyvalerat (PHB(V)), Poly-3-hydroxybutyrat-co-3-hydroxyhexanoat (PHB(H)) oder Poly-3-hydroxybutyrat-co-4-hydroxyvalerat; Polyvinylalkohol (PVOH), Polyvinylidenchlorid (PVDC) oder Ethylenvinylalkohohol (EVOH). Diese Barriereschicht ist gekennzeichnet durch eine Sauerstoff-transmissionsrate (oxygen transmission rate (OTR)) gemessen an dem gesamten Folienverbund nach der Gebindeherstellung nach ASTM D1434 von 0 bis 1000 g/m²/d, sowie einer Wasserdampftransmissionsrate (water vapor transition rate) nach ASTM F1249 von 0 bis 1000 g/m²/d, sowie vorzugsweise einer gleichzeitigen Aromabarriere.

Die gute Sauerstoffbarriere bzw. Aromabarriere lässt sich auch mittels einer Umverpackung für eine oder mehrere Kaffeekapseln erzielen. Geeignete Umverpackungen können mit einem Barrierefilm beschichtete Kunststofffolien oder Papierfolien sein.

Für das Spritzgussverfahren eignen sich insbesondere Compounds der Komponenten i bis iii mit einem MVR (190 °C, 2,16 kg) nach ISO 1133-1 vom 01.03.2012 von 8 bis 40 cm³/10 min, insbesondere bevorzugt 9 bis 30 cm³/10 min.

### Anwendungstechnische Messungen:

Die Molekulargewichte Mn und Mw der teilaromatischen Polyester wurde gemäß DIN 55672-1 mittels SEC bestimmt: Elutionsmittel Hexafluoroisopropanol (HFIP) + 0,05 Gew.-% Trifluoroessigsäure-Ka-Salz; Die Kalibrierung erfolgte mit eng verteilten Polymethylmethacrylat-Standards.

Die Bestimmung der Viskositätszahlen erfolgte nach DIN 53728 Teil 3, 3. Januar 1985, Kapillarviskosimetrie. Zum Einsatz kam ein Mikro-Ubbelohde Viskosimeter, Typ M-II. Als Lösungsmittel wurde das Gemisch: Phenol/o-Dichlorbenzol im Gewichtsverhältnis 50/50 verwendet.

Der E-Modul wurde mittels eines Zugversuchs an Zugstäben mit einer Dicke von etwa 420 µm gemäß ISO 527-3: 2003 bestimmt.

Die Charpy Schlagzähigkeit wurde gemäß DIN EN 179-1/1 eU:2000+Amd.A (gemessen bei 23 °C, 50% rel. F.) bestimmt. Der Probekörper (80mm x 10 mm x4 mm), gelagert nahe an seinen Enden als waagerechter Balken, wird durch einen einzelnen Schlag eines Pendels beansprucht, wobei die Aufschlaglinie in der Mitte zwischen den beiden Probekörper-Widerlagern liegt und (der Probekörper) mit einer hohen, nominell konstanten Geschwindigkeit (2,9 oder 3,8 m/s) gebogen wird.

Die Wärmeformbeständigkeit HDT-B wurde gemäß DIN EN ISO 75-2:2004-9 bestimmt. Ein Standardprobekörper wird einer Dreipunktbiegung unter konstanter Last ausgesetzt, um eine Biegespannung (HDT/B 0.45 MPa) zu erzeugen, die in dem betreffenden Teil dieser Internationalen Norm angegeben wird. Die Temperatur wird mit gleichförmiger Geschwindigkeit (120 K/h) erhöht, und der Temperaturwert, bei dem eine festgelegte Standarddurchbiegung, die der festgelegten Biegedehnungserhöhung (0.2%) entspricht, erreicht wird, wird gemessen.

### Ausgangsstoffe

### Polyester i:

| | |
|---|---|
| i-1 | Polybutylensuccinat: GS-Pla® FZ71-PD der Firma Mitsubishi Chemical Corporation (MVR bei 22 cm³/10 min (190°C, 2,16 kg)) |

### Komponente ii:

| | |
|---|---|
| ii-1 | Polymilchsäure (PLA) Ingeo® 3251 D der Firma NatureWorks (MVR bei 35 cm³/10 min (190°C, 2,16 kg)) |

### Komponente iii:

| | |
|---|---|
| iii-1 | Aktifit PF 111 der Fa. Hoffmann Gruppe, alkylsilanmodifizietes Kaolin (Vergleich) |
| iii-2 | Aktifit AM der Fa. Hoffmann Gruppe, aminosilanmodifizietes Kaolin (Vergleich) |
| iii-3 | Aktifit VM der Fa. Hoffmann Gruppe, vinylsilanmodifiziertes Kaolin |

### Compoundierung

Die in Tabelle 1 aufgeführten Compounds wurden auf einem Extruder des Typs Coperion MC 40 gefertigt. Die Temperaturen am Austritt wurden auf 250°C eingestellt. Anschließend wurde das Extrudat unter Wasser granuliert. Im Anschluss an die Granulatherstellung wurde das Granulat bei 60°C getrocknet.

### Herstellung der Artikel (allgemeien Vorschrift AV)

Das compoundierte Material wird auf einer Spritzgießmaschine vom Typ Ferromatik Millacron K65 mit einer 30,00 mm Schnecke durchgeführt. Das Spritzgießwerkzeug war ein Einfach- oder Mehrfachkavitätenwerkzeug mit offenem Heißkanal. Gefertigt wurde mittels der CAMPUS Werkzeuge der Normen ISO 179/1eU und ISO 527-1/-2. Die Werkzeugtemperatur betrug 30°C, Die Werkzeuge wurden mit einem Druck von 560 bar und einem Nachdruck von 800 bar gefüllt.

**Tabelle 1**

| Beispiel | V-1 | V-2 | V-3 | V-4 | V-5 | V-6 | 7 | 8 | 9 |
|---|---|---|---|---|---|---|---|---|---|
| Compounds (Angaben in Gewichtsprozent) | | | | | | | | | |
| i-1 | 90 | 80 | 70 | 90 | 80 | 70 | 90 | 80 | 70 |
| ii-1 | | | | | | | | | |
| iii-1 | 10 | 20 | 30 | | | | | | |
| iii-2 | | | | 10 | 20 | 30 | | | |
| iii-3 | | | | | | | 10 | 20 | 30 |
| | | | | | | | | | |

| Dicke des Iso Stabs (mm) | 3,92 | 3,93 | 3,92 | 3,92 | 3,92 | 3,92 | 3,92 | 3,92 | 3,92 |
|---|---|---|---|---|---|---|---|---|---|
| E-Modulus (MPa) | 797 | 1012 | 1300 | 800 | 1007 | 1313 | 791 | 1032 | 1350 |
| Charpy (kJ/m²) | 6,16 | 5,78 | 3,93 | 7,02 | 7,05 | 6,05 | 7,6 | 7,08 | 6,14 |
| HDT/B (°C) | 88,0 | 90,4 | 91,3 | 87,5 | 90,1 | 91,7 | 88,6 | 90,1 | 92,6 |

## Patentansprüche

1. Spritzgussartikel enthaltend:
i) 30 bis 90 Gew.-%, bezogen auf das Gesamtgewicht der Komponenten i bis iii, eines biologisch abbaubaren Polyesters enthaltend:
i-a) 90 bis 100 mol %, bezogen auf die Komponenten i-a bis i-b, Bernsteinsäure;
i-b) 0 bis 10 mol %, bezogen auf die Komponenten i-a bis i-b, einer oder mehrerer C₆-C₂₀ Dicarbonsäuren;
i-c) 99 bis 100 mol %, bezogen auf die Komponenten i-a bis i-b, 1,3-Propandiol oder 1,4-Butandiol;
i-d) 0 bis 1 Gew.- %, bezogen auf die Komponenten i-a bis i-c, eines Kettenverlängerers und/oder Verzweigers;
ii) 0 bis 35 Gew.-%, bezogen auf das Gesamtgewicht der Komponenten i bis iii, Polymilchsäure;
iii) 10 bis 35 Gew.-%, bezogen auf das Gesamtgewicht der Komponenten i bis iii, mindestens eines Methacrylsilan- oder Vinylsilan-modifizierten Silikats ausgewählt aus der Gruppe bestehend aus: Kaolin, Muskovit, Montmorellinit, Talk und Wollastonit.

2. Spritzgussartikel nach Anspruch 1, wobei das oberflächenmodifizierte Silikat ein Aspektverhältnis von 1 bis 15 aufweist, wobei das Aspektverhältnis mittels der in der Beschreibung angegebenen Methode bestimmt wird.

3. Spritzgussartikel nach einem der Ansprüche 1 bis 2, wobei das Silikat ein Kaolin ist.

4. Spritzgussartikel nach einem der Ansprüche 1 bis 3, enthaltend 10 bis 25 Gew.-%, bezogen auf das Gesamtgewicht der Komponenten i bis ii, Polymilchsäure.

5. Spritzgussartikel nach Anspruch 1 bis 4, enthaltend 0,5 bis 10 Gew.-%, bezogen auf das Gesamtgewicht der Komponenten i bis iii, eines thermoplastischen Polyurethans.

6. Spritzgussartikel nach einem der Ansprüche 1 bis 5 mit einer Kerbschlagzähigkeit gemäß DIN EN 179-1/1eU:2000 von größer 6 kJ/m².

7. Spritzgussartikel nach einem der Ansprüche 1 bis 6 mit einem E-Modul gemäß ISO 527-3:2003 von größer 1300 Mpa.

## Claims

1. An injection molded article comprising:
i) 30% to 90% by weight based on the total weight of the components i to iii of a biodegradable polyester comprising:
i-a) 90 to 100 mol% based on the components i-a to i-b of succinic acid;
i-b) 0 to 10 mol% based on the components i-a to i-b of one or more C₆-C₂₀ dicarboxylic acids;
i-c) 99 to 100 mol% based on the components i-a to i-b of 1,3-propanediol or 1,4-butanediol;
i-d) 0% to 1% by weight based on the components i-a to i-c of a chain extender and/or branching agent;
ii) 0% to 35% by weight based on the total weight of the components i to iii of polylactic acid;
iii) 10% to 35% by weight based on the total weight of the components i to iii of at least one methacryloylsilane- or vinylsilane-modified silicate selected from the group consisting of: kaolin, muscovite, montmorillonite, talc and wollastonite.

2. The injection molded article according to claim 1, wherein the surface-modified silicate has an aspect ratio of 1 to 15, wherein the aspect ratio is determined by means of the method stated in the description.

3. The injection molded article according to any of claims 1 to 2, wherein the silicate is a kaolin.

4. The injection molded article according to any of claims 1 to 3, comprising 10% to 25% by weight based on the total weight of the components i to ii of polylactic acid.

5. The injection molded article according to any of claims 1 to 4, comprising 0.5% to 10% by weight based on the total weight of the components i to iii of a thermoplastic polyurethane.

6. The injection molded article according to any of claims 1 to 5 having a notched impact strength according to DIN EN 179-1/1eU:2000 of greater than 6 kJ/m².

7. The injection molded article according to any of claims 1 to 6 having an elastic modulus according to ISO 527-3:2003 of greater than 1300 MPa.

## Revendications

1. Article moulé par injection contenant :
i) 30 à 90 % en poids, par rapport au poids total des composants i à iii, d'un polyester biodégradable contenant :
i-a) 90 à 100 % en moles, par rapport aux composants i-a à i-b, d'acide succinique ;
i-b) 0 à 10 % en moles, par rapport aux composants i-a à i-b, d'un ou plusieurs acides dicarboxyliques en C₆₋₂₀ ;
i-c) 99 à 100 % en moles, par rapport aux composants i-a à i-b, de 1,3-propanediol ou de 1,4-butanediol ;
i-d) 0 à 1 % en poids, par rapport aux composants i-a à i-c, d'un agent d'extension de chaînes et/ou d'un agent de ramification ;
ii) 0 à 35 % en poids, par rapport au poids total des composants i à iii, de poly(acide lactique) ;
iii) 10 à 35 % en poids, par rapport au poids total des composants i à iii, d'au moins un silicate, modifié par méthacrylsilane ou vinylsilane, choisi dans le groupe constitué par : le kaolin, la muscovite, la montmorillonite, le talc et la wollastonite.

2. Article moulé par injection selon la revendication 1, le silicate modifié en surface présentant un rapport d'aspect de 1 à 15, le rapport d'aspect étant déterminé au moyen de la méthode indiquée dans la description.

3. Article moulé par injection selon l'une quelconque des revendications 1 et 2, le silicate étant le kaolin.

4. Article moulé par injection selon l'une quelconque des revendications 1 à 3, contenant 10 à 25 % en poids, par rapport au poids total des composants i à ii, de poly(acide lactique).

5. Article moulé par injection selon les revendications 1 à 4, contenant 0,5 à 10 % en poids, par rapport au poids total des composants i à iii, d'un polyuréthane thermoplastique.

6. Article moulé par injection selon l'une quelconque des revendications 1 à 5 doté d'une résistance aux chocs selon la norme DIN EN 179-1/1eU : 2000 supérieure à 6 kJ/m².

7. Article moulé par injection selon l'une quelconque des revendications 1 à 6 doté d'un module E selon la norme ISO 527-3 : 2003 supérieur à 1 300 MPa.
